# EUROPEAN PATENT APPLICATION

(11) **EP 3 012 678 A1**
(43) Date of publication of application: **27.04.2016**
(21) Application number: 15190818.3
(22) Date of filing: 21.10.2015
(51) Int. Cl.: G02B 26/08, G02B 26/10

(54) **LIGHT-DEFLECTION ELEMENT, LIGHT-DEFLECTOR, TWO-DIMENSIONAL IMAGING DISPLAY, OPTICAL SCANNING DEVICE, AND IMAGE FORMING DEVICE**

(30) Priority: 24.10.2014 JP 2014217436; 07.08.2015 JP 2015157423
(71) Applicant: Ricoh Company, Ltd., Tokyo 143-8555 (JP)
(72) Inventor: WATANABE, Eri, Tokyo, 143-8555 (JP); SUZUKI, Shuichi, Kanagawa, 222-8530 (JP); NAKAGAWA, Jun, Tokyo, 143-8555 (JP)
(74) Representative: Schwabe - Sandmair - Marx

(57) **Abstract**

A light-deflection element (2) includes a frame (4, 20), a mirror (6) disposed separately from the frame (4, 20) and having a reflecting surface, and a beam (8) disposed inside the frame (4, 20) and deformed by an external force. Ends of the beam (8) are fixed to the frame (4, 20) and the mirror (6) respectively. The mirror (6) is vibrated by the deformation of the beam (8). A groove (16) between the mirror (6) and the frame (4, 20) is larger than a groove provided to rotatably separate the mirror (6) from the frame (4, 20). The element (2) further has a gap (18, 32) to allow a light shifted from the mirror (6) to pass through.

## Description

### BACKGROUND

### Technical Field

This invention relates to a light-deflection element, a light-deflector, a two-dimensional imaging display, an optical scanning device, and an image forming device.

### Background Art

Small-sized light-deflectors have been developed using a micromachining technique, which is applied with a semiconductor manufacturing technique. The small-sized light-deflectors are utilized to deflect and/or scan a light beam. These light-deflectors are made by the micromachining technique used for finely fabricating silicon or glass. The light-deflectors are integrally formed with a mirror having a reflecting surface on a substrate and a beam to vibrate the mirror. The beam includes a piezoelectric material. The piezoelectric material causes a warpage deformation to the beam when voltage is applied. Accordingly, the mirror is rotated and vibrated by the warpage deformation of the beam. In order to achieve the vibration on the mirror, the mirror and the beam are rotatably separated from a substrate with a groove.

A Patent Literature 1 (PL1), Japanese Patent Publication No. 2011-112806, discloses a technique related to an optical scanner formed through a Micro Electro Mechanical Systems (MEMS) process. In an optical scanner, an undesired light may reach a screen when the light is reflected by a glass cover disposed at upstream of the substrate having a mirror, and may generate an undesired luminescent spot on the screen. The optical scanner of the PL1 discloses a technique to avoid this undesired luminescent spot on the screen. To be specific, the optical scanner of PL1 is configured to include a minute periodical structure disposed at a surface on the light incident side of the glass cover so as to suppress undesired light reflections.

### SUMMARY

The technique disclosed in PL1, however, is not able to suppress undesired light reflection when a part of light beam does not fit to the reflecting surface of the mirror or when the light beam is shifted outside the mirror. In such cases, the reflected light reaches the image forming area or image displaying area, resulting in distortion or degradation of the image.

An object of the embodiments of this invention is, therefore, to provide a light-deflection element that can suppress distortion and degradation of the image caused by an undesired light reflection.

In order to achieve the object, a light-deflection element of the embodiments of the present invention includes a frame, a mirror that is disposed separately from the frame and includes a reflecting surface, and a beam that is disposed inside the frame and is configured to be deformed by an external force. One end of the beam is fixed to the frame and the other end of the beam is fixed to the mirror. The mirror is vibrated by the deformation of the beam, and the light-deflection element has a groove between the mirror and the frame larger than a groove provided to rotatably separate the mirror from the frame. Further, the light-deflection element has a gap to allow a light shifted from the mirror to pass through.

### BRIEF DESCRIPTION OF THE DRAWINGS

FIG. 1A is a schematic view showing a conventional light-deflection element;
FIG. 1B is a schematic view showing a light-deflection element according to a first embodiment;
FIG. 2A is a schematic view showing a conventional light-deflection element;
FIG. 2B is a schematic view showing a light-deflection element according to a second embodiment;
FIG. 3 is a schematic view showing a light-deflection element according to a third embodiment;
FIG. 4 is a cross-sectional view showing a light-deflector according to a fourth embodiment;
FIG. 5A is an enlarged view showing a projecting-and-recessed structure of an antireflection layer provided to the light-deflector of the fourth embodiment;
FIG. 5B is an explanatory view showing a function of the antireflection layer to absorb the light;
FIG. 6 is a cross-sectional view showing a light-deflector according to a fifth embodiment;
FIG. 7A is a cross-sectional view schematically showing a multilayered film which is disposed on the light-deflector of the fifth embodiment;
FIG. 7B is an explanatory view showing a function of the multilayered film to reflect the light;
FIG. 8 is an explanatory view showing a structure of a projector which represents a two-dimensional imaging display according to a sixth embodiment;
FIG. 9 is a perspective view showing an optical scanning device according to a seventh embodiment; and
FIG. 10 is a view showing an image forming device according to an eighth embodiment.

### DETAILED DESCRIPTION

### Embodiment 1

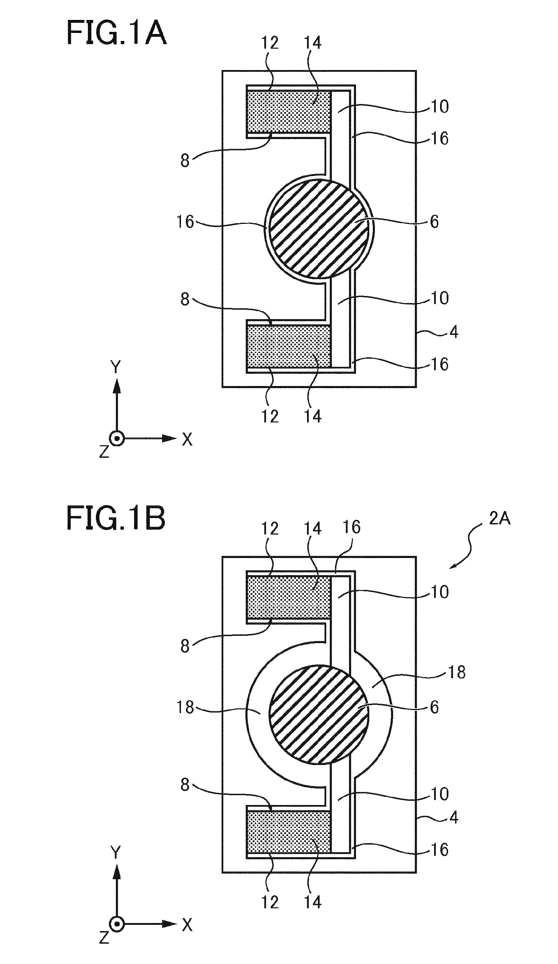

Hereinafter, embodiments of the present invention will be described with reference to the drawings. A first embodiment will be described with reference to FIGs. 1A and 1B. As shown in FIG. 1B, a single-axis type deflection element 2A according to the first embodiment includes a frame 4 made of a plate-shaped substrate and a mirror 6 having a reflecting surface. The mirror 6 is separately provided inside the frame 4 so as to be able to vibrate. The deflection element 2A also includes beams 8 to support the mirror 6. The beams 8 include a pair of torsion bars 10 functioning as an elastic supporting member and a pair of driving beams 12. One end of each torsion bar 10 is fixed to the mirror 6, and the other end of each torsion bar 10 is fixed to one end of each driving beam 12. The other end of each driving beam 12 is then fixed to the frame 4. The substrate forming the frame 4 is made of, for example, a Silicon On Insulator (SOI) substrate. The mirror 6 and the beams 8 are formed by an MEMS process.

A surface of each driving beam 12 has a piezoelectric member 14, as illustrated with dots. The piezoelectric members 14 are each formed by laminating a lower electrode, a piezoelectric material, an upper electrode, and an insulating layer in the order from the surface of the driving beam 12 to the bottom thereof. When the piezoelectric member 14 is applied with voltage (external force), which has a sine wave, the driving beam 12 is warped or bent, causing torsion on the corresponding torsion bar 10. As a result, the mirror 6 rotates and vibrates about the Y-axis (a main-scanning direction). In the drawing, the Z-axis direction indicates a thickness direction of the frame 4. Note that the following description is exemplarily made in accordance with a piezoelectric driving method in which the beams 8 are driven by the piezoelectric members 14. However, it should not be limited thereto. The light-deflection element may be configured such that the beams 8 are deformed by an external force such as an electrostatic force and electromagnetic force.

As shown in FIG. 1A, a conventional light-deflection element is configured such that the mirror 6 and the beam 8 are movably separated from the frame 4 with a groove 16. The groove 16 is formed to allow the mirror 6 to rotate and vibrate and to allow the beams 8 to deform. Accordingly, the width of the groove 16 is kept to a minimum to achieve such function. Further, the width of the groove 16 is kept substantially constant along the entire circumferences of the mirror 6 and beams 8.

In the conventional techniques, when a part of light beam emitted from the light source does not fit to the mirror 6 or when the light beam is shifted outside the mirror 6, the reflected light reaches the image forming area or image displaying area, resulting in distortion or degradation of an image. The technique disclosed in PL1 can prevent undesired light reflection on the glass cover. However, it cannot prevent undesired light reflection when the light beam permeates the glass cover and is emitted outside the mirror. The embodiment of this invention is, therefore, configured to have a gap 18 whose width is wider than that of the groove 16, as shown in FIG. 1B. Accordingly, the light beam shifted outside the mirror 6 passes through the gap 18. In the embodiment, the gap 18 is formed by hollowing out the surrounding area of the mirror 6 in a ring-shape. However, it should not be limited thereto. It is preferable to make the gap 18 as large as possible unless it hinders the strength of the frame 4 to support the rotational vibration of the mirror 6.

In the first embodiment, when a part of the light beam does not fit to the mirror 6 or when the light beam is shifted outside the mirror 6, the light is not reflected but simply passes through the gap 18. Thereby, it can prevent the problem caused by the reflected light. The diameter of the mirror 6 is equal to or greater than a beam diameter of the laser beam. Here, the beam diameter is determined by 1/e² of the peak value of the laser intensity. By determining the beam diameter as above, about 87% of the laser beam is included inside the beam diameter, and the rest of them (i.e., about 13% of the laser beam) is emitted outside the beam diameter. By having a large gap 18, it can prevent the laser beam that does not fit to the mirror 6 from being reflected on the substrate other than the mirror 6.

It is preferable to design the gap 18 so that the laser intensity (light intensity) emitted to the substrate other than the mirror 6 is less than or equal to 1(one)% of the peak value of the laser intensity (light intensity) emitted to the mirror 6. For instance, if the diameter to make the laser intensity less than or equal to 1% is 1.1 mm or greater and the diameter of the mirror 6 is 1 mm, the gap 18 is designed to be 100 µm or greater. To weaken the laser intensity on the substrate other than the mirror 6, the gap 18 may be designed to be 150 µm to 200 µm. With this, even if the center of the laser beam is shifted due to vibration or the like, it can sufficiently suppress the laser intensity on the substrate other than the mirror 6. Note that the size of the gap 18 should be optimized based on the required performance and the beam diameter or the size of the mirror 6.

### Embodiment 2

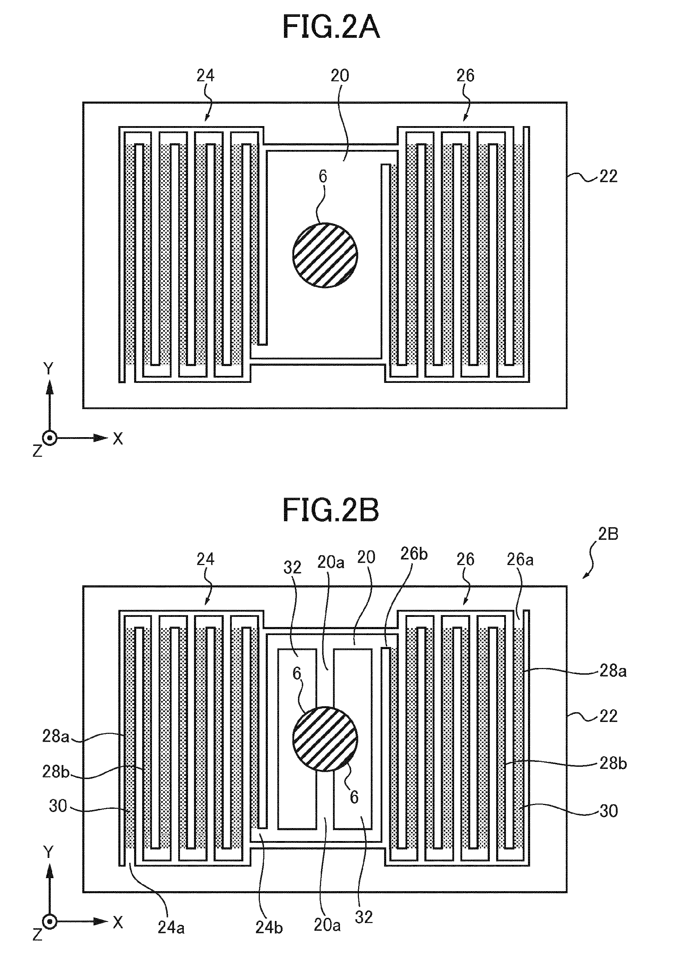

Next, a second embodiment will be described with reference to FIGs. 2A and 2B. Note that in the following embodiments, the same structures as those of the previously described embodiments are indicated by the same reference signs and the detailed descriptions thereof will be omitted. A single-axis-type deflection element 2B of the second embodiment includes a movable frame 20 having a mirror 6 and a support frame 22 disposed to surround the movable frame 20, as shown in FIG. 2B. Further, the light-deflection element 2B includes a first meandering beam 24 (outside beam) and a second meandering beam 26 (outside beam) on the both sides of the movable frame 20. The first and second meandering beams 24, 26 are disposed between the movable frame 20 and the support frame 22.

One end 24a of the first meandering beam 24 is fixed to the support frame 22, and the other end 24b of the first meandering beam 24 is fixed to the movable frame 20. Similarly, one end 26s of the second meandering beam 26 is fixed to the support frame 22, and the other end 26b of the second meandering beam 26 is fixed to the movable frame 20. In other words, the movable frame 20 is indirectly supported by the support frame 22 through the first and second meandering beams 24, 26.

Each of he first and second meandering beams 24, 26 has a folding-back shape, i.e., the beams 28a, 28b are alternatively disposed in the X-axis direction. Similar to the piezoelectric members 14 of the first embodiment, the surfaces of the beams 28a, 28b are equipped with piezoelectric members 30 except for the folding-back parts. The piezoelectric members 30 can drive or move the beams 28a, 28b independently. When the piezoelectric members 30 of the beams 28a, 28b are respectively applied with corresponding voltages (external force), the beams 28a, 28b are warped or bent. Here, the voltage has sawtooth waves. As a result, the adjacent beams are bent in a different direction from each other. The deformation of the beams 28a, 28b are accumulated and delivered to the movable frame 20 to vibrate the movable frame 20. This causes the mirror 6 to vibrate and rotate about the X-axis (i.e., around the vertical direction), thereby achieving the scanning function.

In a conventional technique, the mirror 6 is surrounded by the movable frame 20, as shown in FIG. 2A. However, when a part of the light beam emitted from the light source does not fit to the mirror 6 or when the light beam is shifted outside the mirror 6, the reflected light reaches the image forming area or image displaying area, resulting in distortion or degradation of an image. The second embodiment of this invention is, therefore, configured to have a square gap 32 between the mirror 6 and the movable frame 20, as shown in FIG. 2B. The light beam shifted outside the mirror 6 passes through the gap 32. The mirror 6 is supported by a pair of support sections 20a inside the movable frame 20. Here, the support sections 20a are formed by the remained parts after the gap 32 are hollowed out. Note that although the gap 32 of the second embodiment has a square shape, it should not be limited thereto.

It is preferable to make the gap 32 as large as possible unless it hinders an adequate weight of the movable frame 20 that secures the deflection function of the mirror 6.

With this, even if a part of the light beam does not fit to the mirror 6 or the light beam is shifted outside the mirror 6, the light is not reflected but passes through the gap 32. As a result, the light-deflection element 2B of the second embodiment can prevent the above mentioned problem caused by reflection lights.

### Embodiment 3

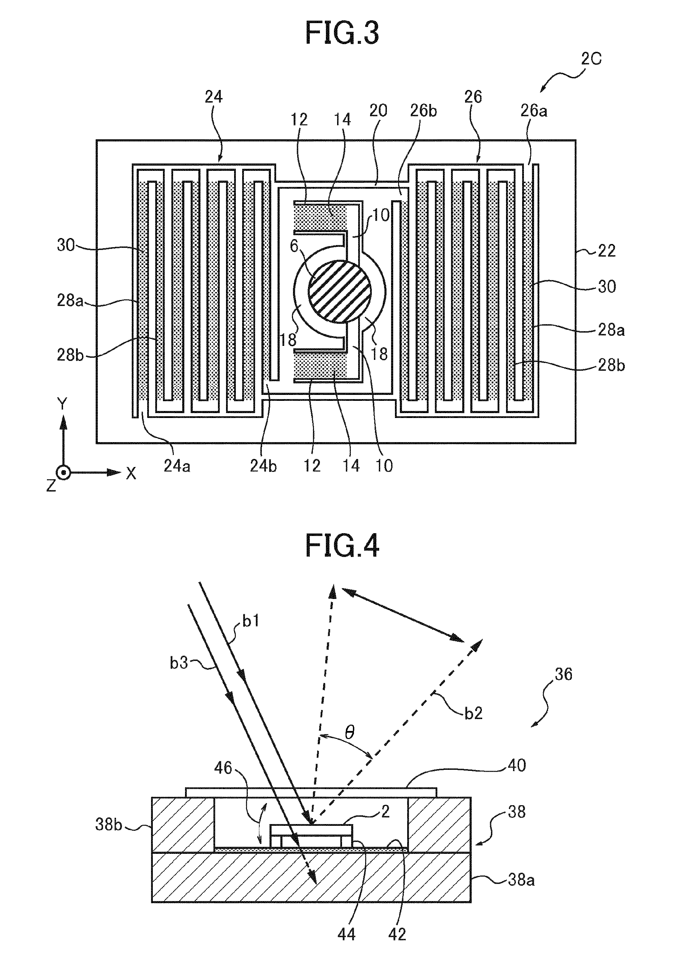

FIG. 3 shows a third embodiment. A dual-axis-type deflection element 2C according to the third embodiment is formed by combining the light-deflection elements 2A, 2B. To be specific, the light-deflection structure of the light-deflection element 2A is included inside the movable frame 20 of the light-deflection element 2B. When the driving beams 12 are applied with voltage, the mirror 6 is vibrated and rotated about the Y-axis. When the first and second meandering beams 24, 26 are applied with voltage, the mirror 6 is vibrated and rotated about the X-axis. That is, when the mirror 6 is vibrated by driving the meandering beams 24, 26, the mirror 6 is vibrated in a direction (vertical direction or sub-scanning direction) different from the direction vibrated by the driving beams 12. Consequently, the light-deflection element 2C of the third embodiment can achieve the laser scanning in two axis directions, i.e., a sine wave vibration in the Y-axis direction achieved by the mechanical resonance and a vibration in the X-axis direction driven by dissonance.

### Embodiment 4

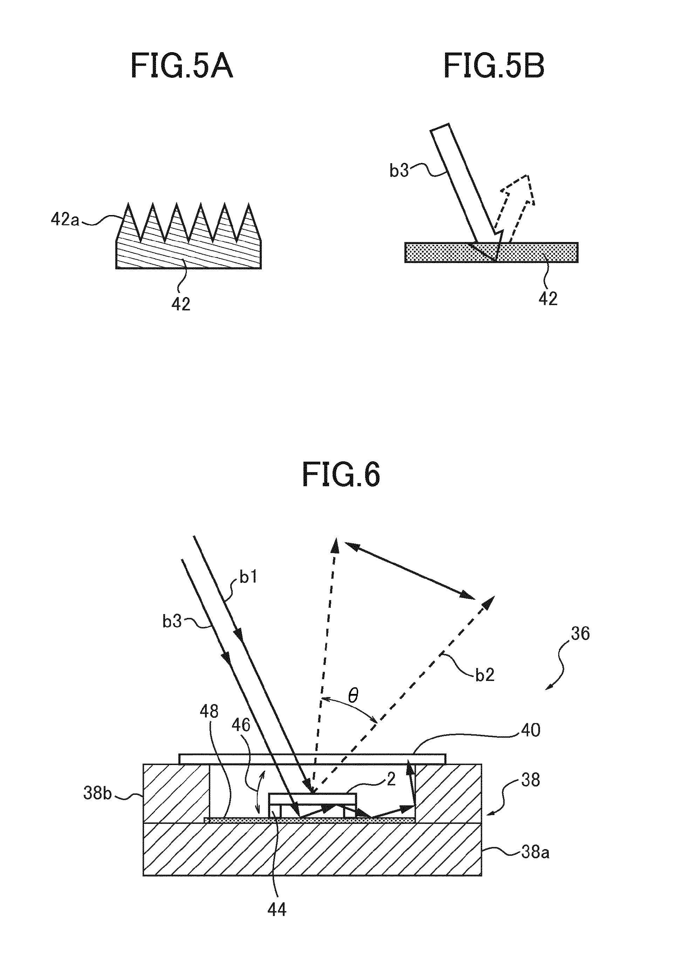

A fourth embodiment will be described with reference to FIGs. 4, 5A and 5B. A light-deflector 36 according to the fourth embodiment includes any one of the light-deflection elements 2 described in the preceding embodiments and a package 38 to accommodate the light-deflection element 2. The package 38 includes a base 38a, wall portions 38b, and a cover glass 40 to cover the upper face of the package 38. An antireflection layer 42 is formed on the surface of the base 38a and functions as an anti-reflection means. The light-deflection element 2 is disposed on the antireflection layer 42 with leg members 44.

As shown in FIG. 5A, the antireflection layer 42 has a minute projecting-and-recessed structure (minute periodical structure) 42a on its surface to absorb light. As shown in FIG. 4, the light beam (incident light b1) emitted from the light source enters the mirror 6 of the light-deflection element 2 and is reflected by the mirror 6. The light reflected by the mirror 6 is indicated as a reflected light b2. The optical scanning of the light-deflection element 2 is executed within the range of a scanning angle θ by the rotational vibration of the mirror 6 in the direction indicated by the arrow 46. When an undesired incident light b3 such as a light shifted outside the mirror 6 enters the light-deflection element 2, the incident light b3 passes through the gap 18 or the gap 32 and reaches the antireflection layer 42. Since the antireflection layer 42 has the minute projecting-and-recessed structure 42a, the incident light b3 is absorbed by the layer 42, as shown in FIG. 5B. Accordingly, it can prevent the light reflected inside the package 38 from reaching an image forming area or an image display area.

Although the antireflection layer 42 of the fourth embodiment has the minute projecting-and-recessed structure (minute periodical structure) to absorb the light, this is only an example. As long as the structure can prevent unnecessary light reflections, the antireflection layer 42 may be formed by a moth-eye structure having a minute structure with a period longer than that of the incident light or formed by a low reflective coating with MgF₂, Al₂O₃, SiO₂, TiO₂, or graphite powder. Note that the antireflection layer 42 may be formed by processing SiO₂ on the surface of MEMS to have the minute structure, or may be formed by coating, for example, aluminum oxide on the layer 42 to have the minute structure on the surface of MEMS.

In the fourth embodiment, the light-deflector 36 is configured so as to prevent the light passing through the gap 18 or the gap 32 from being reflected inside the package 38. However, when the light reflection can be prevented only by the gap 18 or 32, the anti-reflection means may be omitted.

### Embodiment 5

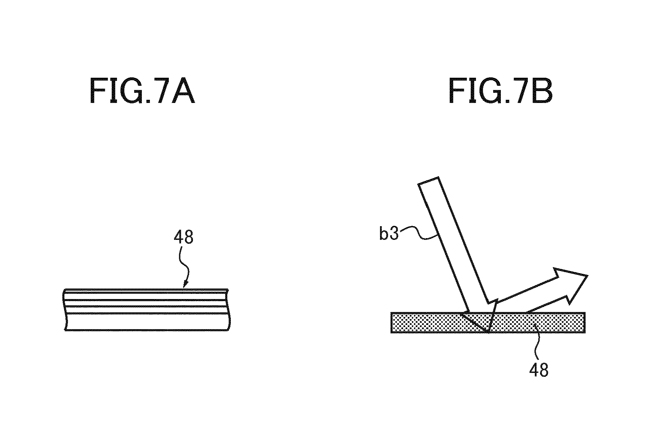

A fifth embodiment will be described with reference to FIGs. 6, 7A, and 7B. As shown in FIG. 6, a light-deflector 36 according to the fifth embodiment is provided with a multilayer film 48 on the surface of the package 38. The multilayer film 48 has a light-deflection structure and functions as an anti-reflection means. As shown in FIG. 7A, the multilayer film 48 is formed with a plurality of layers to gradually change refractive indexes. As shown in FIG. 7B, an undesired incident light b3 emitted to the multilayer film 48 is reflected with an angle different from others. As also shown in FIG. 6, when an undesired incident light such as a light shifted outside the mirror 6 enters the light-deflection element 2, the incident light b3 passes through the gap 18 or the gap 32 and reaches the multilayer film 48.

In the fifth embodiment, the anti-reflection means of the light-deflector 36 is configured by the multilayer film 48 to gradually change the refractive indexes. However, it should not be limited thereto. As long as the anti-reflection means can prevent undesired incident lights from being reflected, the anti-reflection means may be a minute structure having shorter pitches than wavelength of the undesired incident lights, or a low reflective coating.

When the undesired incident light b3 reaches the multilayer film 48, the refractive angle of the undesired incident light b3 is changed. As a result, the undesired incident light b3 is led outside the deflection angle (scanning angle) of the light-deflection element 2 after being hit against the back surface of the light-deflection element 2, for instance. Therefore, the light-deflector 36 can prevent the light reflected inside the package 38 from reaching the image forming area or image displaying area.

Note that the anti-reflection means may be formed by coating an antireflection paint. Also, the anti-reflection means may be provided not only the inner bottom surface of the package 38 but also inner surfaces of the walls 38b. Further, the anti-reflection means may be provided at the portions other than the gaps 18, 32 of the light-deflection element 2. With this, the light-deflector 36 can even prevent the light reflected by the portions other than the gaps 18, 32 from reaching the image forming area or image displaying area, thereby improving the anti-reflection performance.

In the conventional technique, the gap of beams or the gap around the beams is set to be substantially the same size (width) as that of the gap around the mirror so as to improve accuracy of etching. For instance, when the diameter of the mirror is about 1 mm, the gap around the mirror is set to be 30-50 µm, causing a laser beam spread around the beam diameter to be reflected by the surface of the substrate other than the mirror. It may be possible to solve this problem by enlarging the mirror. However, if the mirror is exceedingly enlarged, an external force to increase the scanning angle is also increased. As described above, the embodiments of this invention are, therefore, configured to increase the gap around the mirror to prevent the laser beam from being reflected on the substrate other than the mirror. Further, the embodiments are configured not to increase every gap of the light-deflection elements but to increase only the gaps necessary to solve the above problem. Furthermore, since the requirement of etching accuracy for the mirror is not relatively high, the embodiments are configured such that the size of the gap around the mirror is larger than those of the gap of the beams and the gap around the beams. Accordingly, it can contribute to the miniaturization as suppressing reduction of strength of the light-deflection element.

### Embodiment 6

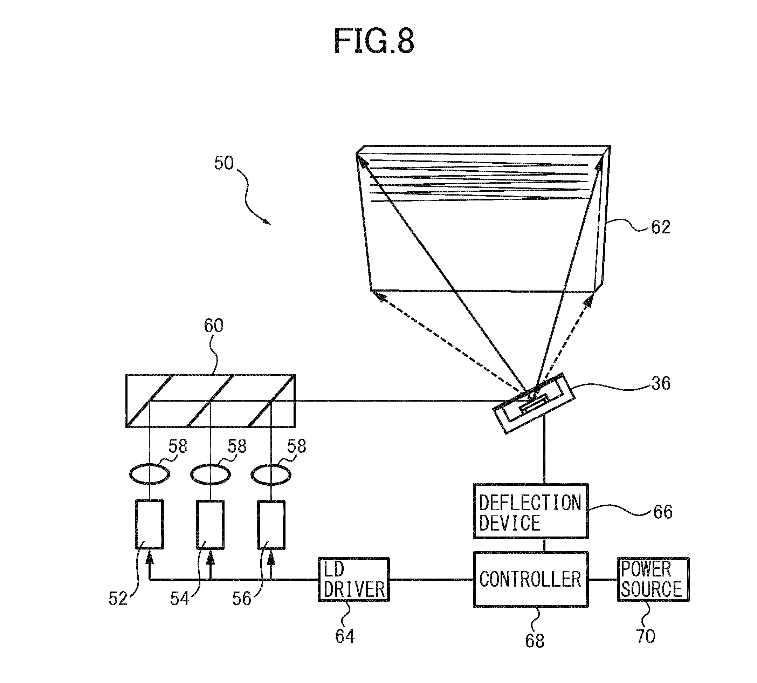

A sixth embodiment (two-dimensional imaging display) will be described with reference to FIG 8. In the sixth embodiment, a projector 50 is shown as an example of a two-dimensional imaging display. The projector 50 includes a red laser light source 52, a green laser light source 54, a blue laser light source 56, and a collimator lens 58. The lights emitted from the light sources 52, 54, 56 are collimated into a parallel beam by the collimator lens 58. In the sixth embodiment, the red laser emitted from the red laser light source 52 has a wavelength of 640 nm, the green laser emitted from the green laser light source 54 has a wavelength of 520 nm, and the blue laser emitted from the blue laser light source 56 has a wavelength of 450 nm. The collimated parallel beam enters an optical path synthesizing means 60. The optical path synthesizing means 60 synthesizes the three optical paths into a single optical path with a synthesis prism such as a dichroic mirror.

The projector 50 further includes a light-deflector 36 having a dual-axis-type light-deflection element, a screen 62, and a controller 68. The light-deflector 36 functions as a two-dimensional scanning means to draw an image, and the screen 62 functions as a projection plane. The optical path synthesizing means 60 has three refracting surfaces. The synthesized laser beam enters the light-deflector 36 and is scanned two-dimensionally to form an image on the screen 62. That is, the image is formed on the screen 62 through the two-dimensional scanning on the laser beam performed by the light-deflector 36 and through light intensities modulation performed by the light sources 52, 54, 56. The light-deflector 36 adjusts the angle of the mirror 6 in response to a signal sent from a deflector driver 66 and projects the image on the screen 62. Concurrently, each of the light sources receives an imaging signal corresponding to the scanning angle of the light-deflector 36 through a laser diode (LD) driver 64 and modulates the light intensities of the laser beams to be emitted.

As described above, the desired image is projected on the display unit (screen) by modulating the light intensities of the light sources and by performing the optical scanning with the light-deflector 36. The controller 68 controls the laser diodes (LD) and the light-deflector 36 to form the image. Here, the reference sign 70 indicates a power source.

### Embodiment 7

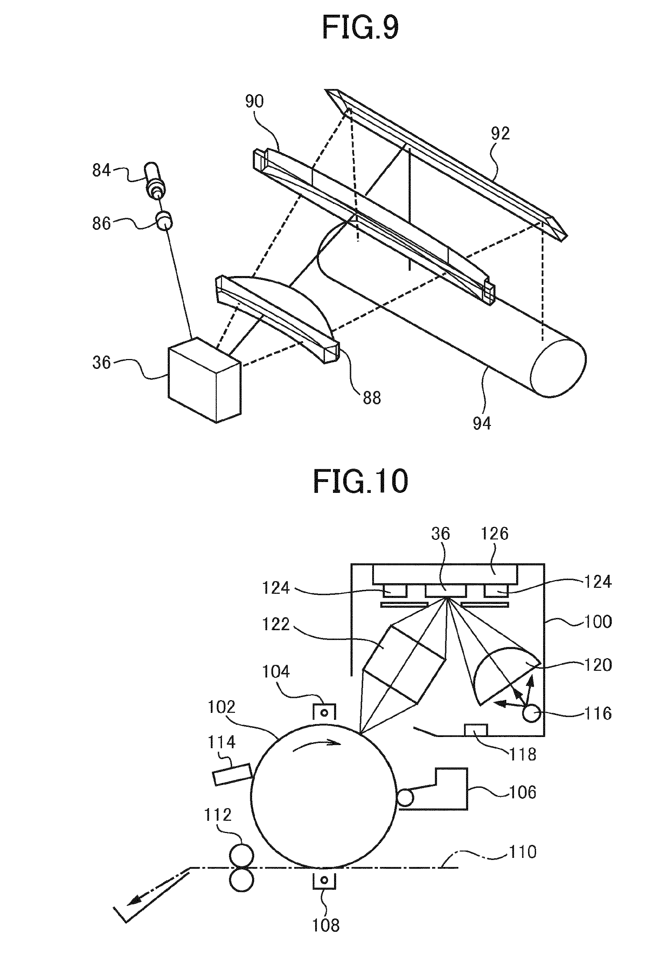

A seventh embodiment (optical scanning device) will be described with reference to FIG. 9. A laser beam emitted from a laser element 84 passes through a collimating optical system 86 and is deflected by a light-deflector 36. The light-deflector 36 includes a light-deflection element 2A or a light-deflection element 2B. The deflected laser beam is imaged in a spot shape by an imaging forming optical system on a scanned surface 94 such as a photoconductor drum. The imaging forming optical system includes an fθ lens 88 (first lens), a troidal lens 90 (second lens), and a mirror 92.

### Embodiment 8

An eighth embodiment (image forming device) will be described with reference to FIG. 10. An optical scanning device 100 scans a surface (scanned surface) of the photoconductor drum 102 in the axial direction of the drum 102 using a single or plural laser beams. Here, the laser beams are modulated in accordance with recording signals and the photoconductor drum 102 functions as an image bearer. The surface of the photoconductor drum 102 is charged by a charging means 104, and the photoconductor drum 102 rotates along the direction indicated by the arrow. The optical scanning device 100 forms an electrostatic latent image by scanning the surface of the photoconductor drum 102 in accordance with image data. The electrostatic latent image is converted to a toner image (visible image) by a developing means 106. The toner image is then transferred to a recording paper 110 (object) by a transferring means 108. The transferred toner image is then fixed on the recording paper 110 by a fixing means 112. The residual toner on the surface of the photoconductor drum 102 is cleaned by a cleaning means 114 after the surface thereof has passed through the part located on the opposite side of the transferring means 108.

Note that the eighth embodiment may be configured to include a belt-type photoconductor instead of the photoconductor drum 102. Further, it may be configured such that the toner image is temporarily transferred to a transferring medium other than the recording paper 110 and then transferred to the recording paper 110 from the transferring medium to be fixed.

The optical scanning device 100 includes a light source 116, a light source driving means 118, and a light-deflector 36. The light source driving means 118 modulates the light source 116, and the light source 116 emits a single or plural laser beams modulated by the light source driving means 118 in accordance with recording signals. The light-deflector 36 includes a light-deflection element 2A or a light-deflection element 2B. The optical scanning device 100 further includes an imaging forming optical system 120, a scanning optical system 122, and the like. The imaging forming optical system 120 images a light beam emitted from the light source 116 on a reflecting surface of the light-deflector 36. The scanning optical system 122 images the light beam reflected by the reflecting surface onto the surface of the photoconductor drum 102. The light-deflector 36 is mounted on a circuit board 126 together with an integrated circuit 124 and installed on the optical scanning device 100.

As described above, one of the technical effects of the embodiments of the present invention is to suppress distortion and degradation of the image by preventing undesired light reflection from reaching an image forming area or an image display area. Further, the embodiments of the present invention can prevent the undesired light reflection (laser beam) from directly reaching an eye of a user even if the position of the mirror 6 or the laser irradiating position is shifted from the corresponding reference position due to the deterioration with the time and/or an impact on the device.

Although the present invention has been described in terms of exemplary embodiments, it is not limited thereto. It should be appreciated that variations or modifications may be made in the embodiments described by persons skilled in the art without departing from the scope of the present invention as defined by the following claims.

## Claims

1. A light-deflection element (2), comprising:
a frame (4, 20);
a mirror (6) that is disposed separately from the frame (4, 20) and includes a reflecting surface; and
a beam (8) that is disposed inside the frame (4, 20) and is configured to be deformed by an external force, one end of the beam (8) being fixed to the frame (4, 20) and the other end of the beam (8) being fixed to the mirror (6),
**characterized in that** the mirror (6) is vibrated by the deformation of the beam (8), and
the light-deflection element (2) has a groove (16) between the mirror (6) and the frame (4, 20) larger than a groove provided to rotatably separate the mirror (6) from the frame (4, 20), and further has a gap (18, 32) to allow a light shifted from the mirror (6) to pass through.

2. The light-deflection element (2) as claimed in claim 1, further comprising:
a support frame (22) disposed to surround the frame (20); and
outside beams (24, 26) disposed between the frame (20) and the support frame (22) on both sides of the frame (20),
wherein one end (24a, 26a) of each outside beam (24, 26) is fixed to the support frame (22) and the other end (24b, 26b) of each outside beam (24, 26) is fixed to the frame (20),
each outside beam (24, 26) is configured to be deformed by the external force, and
when the frame (20) is vibrated by the deformation of the outside beams (24, 26, 28a, 27b), the mirror (6) vibrates in a direction (X-axis direction) different from a direction (Y-axis direction) of the vibration caused by the deformation of the beam (8).

3. The light-deflection element (2) as claimed in claim 2, wherein the gap (18, 32) between the mirror (6) and the frame (20) to allow the light shifted from the mirror (6) to pass through is larger than any gaps present in the support frame (22).

4. The light-deflection element (2) as claimed in any of claims 1 to 3, wherein the width of the gap (18, 32) between the mirror (6) and the frame (4, 20) is determined such that a light intensity of a light emitted to the frame (4, 20) is less than or equal to 1% of a peak value of a light intensity of a light emitted to the mirror (6).

5. The light-deflection element (2) as claimed in any of claims 1 to 4, wherein the gap (18, 32) between the mirror (6) and the frame (4, 20) is from 100 µm to 200 µm.

6. The light-deflection element (2) as claimed in any of claims 1 to 5, the beam (8) and the outside beams (24, 26) are deformed by applying voltage.

7. The light-deflection element (2) as claimed in any of claims 1 to 6, further comprising an anti-reflection means around the mirror (6) to prevent the light shifted from the mirror (6) from being reflected.

8. A light-deflector (36), comprising:
the light-deflection element (2) as claimed in any of claims 1 to 7; and
a package (38) to accommodate the light-deflection element (2),
wherein the package (38) includes an anti-reflection means to prevent the light passed through the gap (18, 32) from being reflected.

9. The light-deflector (36) as claimed in claim 8, wherein the anti-reflection means has one of a minute projecting-and-recessed structure (42a), a structure with an antireflection paint, and a deflection structure to lead the light passed through the gap (18, 32) outside a deflection angle of the light-deflection element (2).

10. A two-dimensional imaging display (50), comprising:
light sources (52, 54, 56) to emit a plurality of laser beams each having different wavelengths from each other;
an optical path synthesizing means (60) to synthesize optical paths of the laser beams; and
a two-dimensional scanning means to draw an image by scanning the synthesized laser beams,
wherein the two-dimensional scanning means is configured by the light-deflector (36) as claimed in claim 8 or 9, and
the light-deflector (36) deflects the synthesized laser beams and projects the image on a projection plane.

11. An optical scanning device (100), comprising:
a light source (84) to emit a laser beam:
a light-deflector (36) to deflect the light beam emitted from the light source (84); and
an imaging forming optical system (88, 90, 92) to image the deflected light beam in a spot shape on a scanned surface (94),
wherein the light-deflector is the light-deflector as claimed in claim 8 or 9.

12. An image forming device, comprising:
an image bearer (102);
an optical scanning device (100) to form an electrostatic latent image on the image bearer (102) in accordance with image data;
a developing means (106) to convert the electrostatic latent image to a visible image; and
a transferring means (108) to transfer the visible image onto an object,
wherein the optical scanning device (100) is the optical scanning device as claimed in claim 11.
